# EUROPÄISCHE PATENTSCHRIFT

(11) **EP 0 346 821 B1**
(45) Veröffentlichungstag und Bekanntmachung des Hinweises auf die Patenterteilung: **03.03.1993**
(21) Anmeldenummer: 89110663.5
(22) Anmeldetag: 13.06.1989
(51) Int. Cl.: C04B 37/00

(54) **Verfahren zum Fügen von Keramikteilen**
Method for joining ceramic elements together
Méthode de jonction d'eléments céramiques

(30) Priorität: 16.06.1988 DE 3820459
(43) Veröffentlichungstag der Anmeldung: 20.12.1989
(73) Patentinhaber: FORSCHUNGSZENTRUM JÜLICH GMBH, 52425 Jülich (DE)
(72) Erfinder: Gat-Liquornik, Martin, Dr., D-5170 Jülich (DE); Naoumidis, Aristides, Dr., D-5170 Jülich (DE)

(56) Entgegenhaltungen:
- EP-A- 0 236 856
- DE-A- 3 003 186

## Beschreibung

Die Erfindung bezieht sich auf ein Verfahren zum Fügen von Keramikteilen, bei dem zwischen die sauberen geschliffenen Keramik-Fügeflächen reaktionsfähiges, elektrisch leitfähiges Material gebracht und auf Fügetemperatur aufgeheizt wird.

Keramische Werkstoffe sind wegen ihrer Temperaturbeständigkeit und Festigkeit interessant, wegen der im allgemeinen hohen Härte dieser Materialien sind allerdings Formgebungsverfahren nur begrenzt anwendbar. Aus diesem Grunde und wegen der Schwierigkeit der Herstellung größerer Werkstücke sind Verfahren zur Verbindung von Keramikteilen besonders wichtig.

Bekannt sind Fügeverfahren, bei denen die Paßflächen unter Zwischenschaltung mehr oder minder dicker Schichten von insbesondere reaktiven Materialien (z.B. Carbid- und/oder Silicidbildnern für das Verbinden von Siliciumcarbidteilen) unter hohen Drucken und bei hohen Temperaturen über eine gewisse Zeitdauer in einer Art Heißpreßverfahren miteinander verbunden werden (siehe z.B. EP 0 209 672-B1).

Die dabei angewandten Drucke und Temperaturen erfordern aufwendige Einrichtungen, die zudem üblicherweise unter Inertgas betrieben werden.

Aufgabe der Erfindung ist es daher, ein Verfahren vorzusehen, das sehr viel einfacher und wirtschaftlicher durchführbar ist.

Das zu diesem Zweck entwickelte erfindungsgemäße Verfahren der eingangs genannten Art ist dadurch gekennzeichnet, daß man das elektrisch leitfähige Material als Widerstand geschaltet durch einen elektrischen Stromstoß von ≦ 100 µs aufschmilzt, verdampft und mit der angrenzenden Keramik zur Reaktion bringt.

Es wurde nämlich überraschenderweise gefunden, daß eine sehr einfache Verbindung von Keramikteilen möglich ist, wenn eine dünne elektrisch leitfähige Schicht, insbesondere in Form einer dünnen Folie oder einer Schicht Draht aus einem elektrisch leitenden Material als Widerstand geschaltet, kurzzeitig mit einem so hohen Strom (etwa unter Bedingungen einer Drahtexplosion) derart belastet wird, daß eine vollständige Verdampfung des Schichtmaterials, z. B. Metalls und Reaktion mit den angrenzenden Keramikflächen möglich ist. Die Energiezufuhr soll dabei so kurzzeitig erfolgen, daß eine merkliche Energieaufnahme durch die Keramik selbst unterbleibt und umfangreiche Reaktionen mit der umgebenden Atmosphäre bei hohen Temperaturen nicht erfolgen können. Die Schicht, die nach dem Fügeverfahren als solche praktisch nicht mehr faßbar sein soll, wird möglichst dünn gewählt und ist zweckmäßigerweise etwa 1 bis 50 µm stark, insbesondere etwa 5 bis 25 µm dick.

Gemäß der Erfindung wird die elektrisch leitfähige Schicht (insbesondere Metalldraht oder -folie, oder auch Graphit in Form von Gewebe, Vlies, Fäden oder Folie) als Widerstand geschaltet und mittels einer Kondensatorenbank mit einer Spannung von mehreren kV beaufschlagt. Die Stromzufuhr kann insbesondere über entsprechende Klemmbacken erfolgen, zwischen die überstehende Folienteile (oder Drahtenden) geklemmt werden.

Unter diesen Umständen können mehrere kJ Energie in das Schichtmaterial eingekoppelt werden. Da die Materialmenge klein ist, erfolgt eine sehr rasche Aufheizung, bei der das Material schmilzt, verdampft, in die angrenzende Keramik eindringt und mit dieser reagiert. Der gesamte Prozeß läuft in wenigen Mikrosekunden ab. Vorzugsweise werden zumindest einige kJ pro g leitfähiges Material in Zeiten < 100 µs, insbesondere innerhalb von 1 - 30 µs, zugeführt.

Die zu fügende Anordnung wird vorzugsweise eingespannt unter Druckbelastung (etwa im Megapascal-Bereich) des Nahtbereiches, innerhalb dessen - je nach Kurzzeitigkeit des Stromstoßes - erheblichen Kräfte auftreten, die sich ggf. als Schockwelle in das angrenzende Keramik-Material fortpflanzen, denen durch die Einspannung entgegengewirkt werden muß.

Das erfindungsgemäße Verfahren eignet sich für die Verbindung von Keramikteilen unterschiedlicher Art, wie z. B. von Siliciumnitrid, Siliciumcarbid, Borcarbid, Aluminiumoxid usw. Für die elektrisch leitfähige Schicht können insbesondere Titan, Tantal, Zirkonium, Hafnium, Wolfram oder Graphit vorgesehen werden, wenn Carbidteile oder Silicidteile gefügt werden sollen und für die Verbidnung von Oxidkeramik kann eine Metallfolie aus Magnesium, Aluminium oder Zirkonium verwendet werden.

Besonders untersucht wurde die Verbindung von Siliciumcarbidteilen unter Zwischenschaltung von Titanfolie, wofür weiter unten ein Beispiel angegeben wird.

Zweckmäßig kann auch eine Vorbeschichtung der Fügeflächen mit einem reaktiven oder reaktionsfördernden Material sein, wie z. B. die Beschichtung von Siliciumcarbidflächen mit einer Siliciumschicht (die etwa aufgedampft sein kann), woraufhin dann zwischen die so beschichteten Flächen eine Graphit_folie gebracht und gemäß der Erfindung einem Stromstoß ausgesetzt wird.

Die durch Stromstoß erzeugte Verbindung kann ggf. einer thermischen Nachbehandlung unterworfen werden, durch welche die Festigkeit der Verbindung erhöht werden kann.

Nachfolgend wird die Erfindung anhand eines Beispiels unter Bezugnahme auf die angefügten Zeichnungen näher beschrieben. Es zeigen schematisch:
Figur 1 die zwischen zu verbindenden Keramikflächen eingespannte und beidseits durch Stromklemmen kontaktierte Metallfolie und
Figur 2 einen Schaltkreis zur Erzeugung des Stromstoßes.

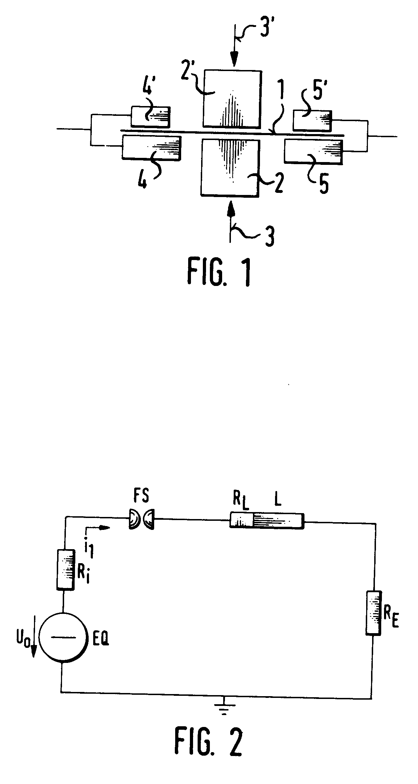

Im einzelnen zeigt Figur 1 die Folie 1 zwischen den zu fügenden Keramikteilen 2, 2', deren Einspannung durch Pfeile 3, 3' angedeutet wird. Überstehende Folie 1 wird zwischen Klemmbacken 4, 4' und 5, 5' kontaktiert, die mit entsprechenden Stromzuleitungen versehen sind.

Der in Figur 2 angedeutete Schaltkreis umfaßt eine Gleichspannungsquelle EQ mit einer Spannung Uₒ und Innenwiderstand Rᵢ, die über die "Funkstrecke" FS (zur Erzeugung des Stromstoßes) über einen induktiven Speicher mit induktivem Anteil L und ohmschem Anteil R_{L} sowie einen Verbraucherwiderstand R_{E} verbunden ist.

Bei einer Versuchsreihe wurde zwischen zwei SiC-Stäbe 2, 2' mit glattgeschliffener Fügefläche von je 1,5 cm² eine Titanfolie von ca. 15 µm gebracht und die Anordnung mit einem Druck von 2,5 MPa eingespannt, wie in Figur 1 ersichtlich ist. Die Titanfolie wurde einem Stromstoß durch Anlegen einer Spannung von 2,5 - 7,5 kV (Peakwert) innerhalb von 1 bis 2 µs ausgesetzt. Die Spannung Uₒ lag zwischen 5 und 15 kV, die Aufladung der Kondensatoren betrug 4 mF. Der Schaltkreis hatte einen Dämpfungsfaktor von 6,8 x 10³ s⁻¹, eine Eigenfrequenz von 1,9 x 10⁵ Hz, eine Induktivität von 6,8 x 10⁻⁷ H und einen Widerstand von 9,3 mΩ. Als Ergebnis wurden gefügte Proben erhalten.

## Patentansprüche

1. Verfahren zum Fügen von Keramikteilen, bei dem zwischen die sauberen geschliffenen Keramik-Fügeflächen reaktionsfähiges, elektrisch leitfähiges Material gebracht und auf Fügetempratur aufgeheizt wird,
**dadurch gekennzeichnet,**
daß man das elektrisch leitfähige Material als Widerstand geschaltet durch einen elektrischen Stromstoß von ≦ 100 µs aufschmilzt, verdampft und mit der angrenzenden Keramik zur Reaktion bringt.

2. Verfahren nach Anspruch 1,
**dadurch gekennzeichnet,**
daß die Energiezufuhr zum elektrisch leitfähigen Material innerhalb von 1 - 30 µs erfolgt.

3. Verfahren nach Anspruch 1 oder 2,
**dadurch gekennzeichnet,**
daß das elektrisch leitfähige Material in Form von Folie oder Draht vorgesehen wird.

4. Verfahren nach einem der vorangehenden Ansprüche,
**dadurch gekennzeichnet,**
daß das elektrisch leitfähige Material in einer Schichtdicke von maximal 50 µm, insbesondere als 1 bis 25 µm starke Folie vorgesehen wird.

5. Verfahren nach einem der vorangehenden Ansprüche,
**dadurch gekennzeichnet,**
daß die zu verbindenden Teile unter Druckbelastung des Nahtbereichs eingespannt werden.

6. Verfahren nach einem der vorangehenden Ansprüche,
**dadurch gekennzeichnet,**
daß die zu verbindende Keramik Siliciumcarbid ist und daß das elektrisch leitfähige Material aus einem Carbid- und/oder Silicidbildner, insbesondere aus Titan, Zirkonium, Hafnium, Tantal, Wolfram oder Graphit besteht.

7. Verfahren nach einem der vorangehenden Ansprüche,
**dadurch gekennzeichnet,**
daß zumindest eine der Keramik-Fügeflächen mit einem reaktiven oder reaktionsfördenden Material vorbeschichtet wird.

8. Verfahren nach Anspruch 7,
**dadurch gekennzeichnet,**
daß Siliciumcarbid-Fügeflächen mit Silicium vorbeschichtet werden und das elektrisch leitfähige Material durch Graphitfolie, -gewebe, -vlies oder -fäden gebildet wird.

9. Verfahren nach einem der vorangehenden Ansprüche,
**dadurch gekennzeichnet,**
daß die durch Stromstoß erzeugte Verbindung einer thermischen Nachbehandlung unterworfen wird.

## Claims

1. A method of joining ceramic parts, in which reactive, electrically conductive material is placed between the clean, ground ceramic joint surfaces and heated to the joining temperature, characterised in that the electrically conductive material, connected as a resistor, is melted, vaporised and caused to react with the adjoining ceramic by means of a current surge of ≦ 100 µsec.

2. A method according to Claim 1, characterised in that the energy supply to the electrically conductive ceramic is effected within 1 - 30 µsec.

3. A method according to Claim 1 or 2, characterised in that the electrically conductive material is provided in the form of foil or wire.

4. A method according to one of the preceding Claims, characterised in that the electrically conductive material is provided at a maximum layer thickness of 50 µm, particularly as a foil 1 to 25 µm thick.

5. A method according to one of the preceding Claims, characterised in that the parts to be joined are clamped with pressure loading of the joint region.

6. A method according to one of the preceding Claims, characterised in that the ceramic to be joined is silicon carbide and that the electrically conductive material comprises a carbide- and/or silicide former, particularly titanium, zirconium, hafnium, tantalum, tungsten or graphite.

7. A method according to one of the preceding Claims, characterised in that at least one of the ceramic joint surfaces is pre-coated with a reactive or reaction-promoting material.

8. A method according to Claim 7, characterised in that silicon carbide joint surfaces are pre-coated with silicon and the electrically conductive material is formed from graphite foil, fabric, fleece or fibres.

9. A method according to one of the preceding Claims, characterised in that the joint produced by a current surge is subjected to subsequent thermal treatment.

## Revendications

1. Procédé pour assembler des pièces en matériau céramique, selon lequel on place un matériau électriquement conducteur et réactif entre les faces de joint en céramique propres et polies, et on le chauffe à la température d'assemblage,
**caractérisé** en ce qu'au moyen d'une impulsion de courant électrique <= 100 µs, le matériau électriquement conducteur, branché en résistance, est fondu, évaporé et amené en réaction avec le matériau céramique limitrophe.

2. Procédé selon la revendication 1, **caractérisé** en ce que l'apport d'énergie au matériau électriquement conducteur s'effectue en 1 à 30 µs.

3. Procédé selon la revendication 1 ou 2, **caractérisé** en ce que le matériau électriquement conducteur est prévu sous forme de feuille ou de fil.

4. Procédé selon l'une quelconque des revendications précédentes, **caractérisé** en ce que le matériau électriquement conducteur est prévu dans une épaisseur de couche d'au plus 50 µm, notamment sous la forme d'une feuille de 1 à 25 µm d'épaisseur.

5. Procédé selon l'une quelconque des revendications précédentes, **caractérisé** en ce que les pièces à assembler sont serrées avec une sollicitation en pression de la zone de joint.

6. Procédé selon l'une quelconque des revendications précédentes, **caractérisé** en ce que le matériau céramique à assembler est du carbure de silicium, et en ce que le matériau électriquement conducteur est un matériau générateur de carbure et/ou de siliciure, notamment du titane, du zirconium, du hafnium, du tantale, du wolfram ou du graphite.

7. Procédé selon l'une quelconque des revendications précédentes, **caractérisé** en ce qu'au moins une des faces de joint en matériau céramique est préalablement enduite d'un matériau réactif ou accélérant la réaction.

8. Procédé selon la revendication 7, **caractérisé** en ce que les faces de joint en carbure de silicium sont préalablement enduites de silicium, et le matériau électriquement conducteur est constitué d'une feuille, d'un tissu, d'un voile ou de fils de graphite.

9. Procédé selon l'une quelconque des revendications précédentes, **caractérisé** en ce que l'assemblage produit par l'impulsion de courant est soumis à un traitement thermique postérieur.
